# EUROPÄISCHE PATENTSCHRIFT

(11) **EP 4 012 174 B1**
(45) Veröffentlichungstag und Bekanntmachung des Hinweises auf die Patenterteilung: **11.10.2023**
(21) Anmeldenummer: 20212975.5
(22) Anmeldetag: 10.12.2020
(51) Int. Cl.: F03D 17/00

(54) **VERFAHREN UND VORRICHTUNG ZUM BETREIBEN EINER WINDTURBINE**
METHOD AND DEVICE FOR OPERATING A WIND TURBINE
PROCÉDÉ ET DISPOSITIF DE FONCTIONNEMENT D'UNE ÉOLIENNE

(43) Veröffentlichungstag der Anmeldung: 15.06.2022
(73) Patentinhaber: MicroVision, Inc., Redmond, WA 98052 (US)
(72) Erfinder: MELI TIWA, William Herman, 22143 Hamburg (DE)
(74) Vertreter: RGTH

(56) Entgegenhaltungen:
- US-A1- 2018 171 984
- US-A1- 2018 171 985

## Beschreibung

Die vorliegende Erfindung betrifft ein Verfahren sowie eine Vorrichtung zum Betreiben einer Windturbine.

### Stand der Technik

Grundsätzlich ist aus dem Stand der Technik bekannt, dass Sensoren benutzt werden können, um die Bewegung der Rotorblätter einer Windturbine zu überwachen. Diese Methoden setzen allerdings auf Messdaten innerhalb der Turbine. Diese turbineninternen Signale ermöglichen jedoch schwer eine Aussage zu relevanten Einflussgrößen der Steuerung einer Windturbine, beispielsweise dem Turmfreigang, da die Blattspitze von innen angeordneten Sensoren ausgehend von der Blattwurzel nicht vermessen werden kann.

US 2018/171984 A1 beschreibt ein System zur Überwachung der Durchbiegung von Rotorblättern einer Windkraftanlage.

### Darstellung der Erfindung: Aufgabe, Lösung, Vorteile

Die Aufgabe der vorliegenden Erfindung ist es, ein Verfahren sowie eine Vorrichtung zum Betreiben einer Windturbine derart zu verbessern, dass ein Ist-Strukturzustand mindestens eines Punktes eines Rotorblattes zuverlässig und genau beobachtet werden kann, um auf dessen Basis Einflussgrößen für die Steuerung der Windturbine herleiten zu können.

Gelöst wird die oben genannte Aufgabe durch ein Verfahren zum Betreiben einer Windturbine, das mehrere Messungen mittels mindestens eines ersten Lidarsensors umfasst, der als Solid-State-Lidarsensor ausgebildet ist.

Solid state Lidar-Sensoren haben nicht nur den Vorteil der Antriebsfreiheit, sondern sind insbesondere für den Einsatz an Windturbinen optimal. Dies liegt daran, dass eine Windturbine viele drehende Bauteile aufweist und es daher aufgrund der gyroskopischen Effekte besonders vorteilhaft ist, wenn ein Lidar-Sensor eingesetzt wird, der keine bewegenden Bauteile, wie Scanspiegel, aufweist.

Der Lidar-Sensor umfasst vor allem eine Sendeeinheit und eine Empfangseinheit. Bei den Messungen handelt es sich vor allem um Lichtlaufzeitmessungen. Lichtlaufzeitmessungen basieren auf dem Time-of-Flight-Prinzip. Es sendet somit mindestens ein Sendeelement, vorzugsweise mehrere Sendeelemente, der Sendeeinheit, vorzugsweise eines Lasers, mindestens einen Messpuls aus, der von einem zugeordneten Empfangselement der Empfangseinheit empfangen wird. Basierend auf der Lichtgeschwindigkeit kann die Distanz zwischen dem Sensor und dem Objekt, an dem der Puls reflektiert wurde, bestimmt werden. Jede Reflektion stellt einen Punkt in einer Punktwolke als Ergebnis der Messung dar. Bei den Empfangselementen handelt es sich insbesondere um Avalanche-Photodetektoren, beispielsweise um Single-Photon-Avalanche-Dioden, SPAD.

Der erste Lidarsensor ist außen an der Windturbine derart angeordnet, dass er mit den Rotorblättern der Windturbine mitrotiert. Auf Basis der Lidardaten wird ein Ist-Strukturzustand mindestens eines Punktes eines Rotorblattes, insbesondere mindestens ein Punkt jedes Rotorblattes, der Windturbine beobachtet. Insbesondere wird ein Punkt, dessen Ist-Strukturzustand beobachtet wird, als zu beobachtender Punkt bezeichnet.

Unter dem Begriff "Ist-Strukturzustand" des zu beobachtenden Punktes sind eine Auslenkung des Punktes gegenüber einer Normalposition und/oder eine Geschwindigkeit des Punktes und/oder eine Beschleunigung des Punktes gemeint. Diese können als Parameter des Ist-Strukturzustandes verstanden werden. Ein Punkt, dessen Ist-Strukturzustand beobachtet wird, wird im Folgenden als zu beobachtender Punkt bezeichnet.

Das mindestens eine Rotorblatt ist verschiedenen Einflüssen dessen direkten Umgebung bzw. daraus resultierenden Kräften ausgesetzt, insbesondere dem herrschenden Wind. Ferner wirken auf das Rotorblatt bereits aufgrund dessen Rotation Kräfte. Dies kann dazu führen, dass sich das Rotorblatt entsprechend biegt. Eine Biegung ist sogar in einem gewissen Maße vorgesehen, da die Rotorblätter bewusst flexibel ausgebildet sind, damit die immer längeren Rotorblätter nicht brechen. Insofern können bestimmte Punkte von ihrer Normalposition, das heißt einer Position ohne entsprechende Umwelteinflüsse und ohne Rotation, abweichen.

Es kann unter der Auslenkung des Punktes gegenüber einer Normalposition eine lineare Auslenkung in senkrechter Richtung zu einer Längsrichtung des Rotorblattes gemeint sein. Ferner kann unter dem Begriff "Auslenkung" auch eine Torsion des Punktes gegenüber der Normalposition, in anderen Worten eine Drehauslenkung, gemeint sein. Diese resultiert daraus, dass das Rotorblatt sich aufgrund der einwirkenden Kräfte um die eigene Achse verdrehen kann. Der Ist-Strukturzustand kann sowohl die lineare Auslenkung als auch die Torsion umfassen.

Die Messungen dienen zur Ermittlung, insbesondere Gewinnung, von Lidardaten. Bei den Lidardaten handelt es sich vorzugsweise um Punktwolken. Insbesondere finden die Messungen zu unterschiedlichen Zeitpunkten statt, sodass Lidardaten zu unterschiedlichen Zeitpunkten vorliegen. Insbesondere wird auf Basis der Lidardaten der Ist-Strukturzustand zu verschiedenen Zeitpunkten anhand jeweils einer Messung des Lidarsensors ermittelt und somit beobachtet. Insbesondere findet in regelmäßigen Abständen, insbesondere kontinuierlich, jeweils eine Messung statt.

Insbesondere ist der mindestens eine erste Lidarsensor an einer Nabe der Windturbine angeordnet, insbesondere zwischen den Rotorblättern, am meistens bevorzugt mittig zwischen den Rotorblättern. Der mindestens eine erste Lidarsensor kann im Wurzelbereich eines Rotorblatts angeordnet sein. Insbesondere ist der Lidarsensor derart angeordnet, dass er das mindestens eine Rotorblatt im Wesentlichen senkrecht erfasst. Es werden vorzugsweise keine Sensoren verwendet, die an der Rotorblattspitze angeordnet sind. Lokal platzierte Sensoren an der Blattspitze sind in der Regel nach einem Blitzschlag nicht mehr verwendbar. Daher kommen die entscheidenden Vorteile einer berührungslosen Messung mittels Lidarsensoren.

Insbesondere werden mehrere erste Lidarsensoren eingesetzt, die wie oben beschrieben ausgebildet und/oder angeordnet sind. Insbesondere ist zwischen jeweils zwei Rotorblättern ein Lidarsensor angeordnet. Insbesondere sind die ersten Lidarsensoren so angeordnet, dass jedem ersten Lidarsensor genau ein Rotorblatt zugeordnet werden kann. Der erste Lidarsensor kann derart ausgerichtet sein, dass er jeweils sowohl den Nahbereich (Wurzelbereich) also auch den Fernbereich (Bereich um die Blattspitze) des Rotorblattes und/oder eines anderen Rotorblattes und/oder aller Rotorblätter vermessen kann.

Vorzugsweise wird ein Ist-Strukturzustand jeweils mindestens eines Punktes sämtlicher Rotorblätter beobachtet.

Der mindestens eine Punkt muss auf dem Rotorblatt nicht fest definiert sein. Es kann somit ein fest definierter und/oder ein nicht fest definierter Punkt beobachtet werden. Bei einem nicht fest definierten Punkt muss sich somit nicht um einen konkreten Punkt auf dem Rotorblatt handeln. Ein Beispiel eines fest definierten Punktes ist die Rotorblattspitze. Ein Beispiel für einen Punkt, der nicht fest definiert ist, ist der Punkt des Rotorblattes, der sich am nächsten zum Turm befindet. Dieser nächste Punkt kann, je nachdem wie stark das Rotorblatt durchgebogen ist, zeitlich unterschiedlichen fest definierten Punkten auf dem Rotorblatt entsprechen. Bspw. kann zu einem ersten Zeitpunkt die Rotorblattspitze den nächsten Punkt zum Turm darstellen, während zu einem zweiten Zeitpunkt ein Punkt am Bauch des Rotorblattes diesem entspricht. Dieser ist somit nicht durch eine feste Lage auf dem Rotorblatt, sondern in Relation zu einem anderen Gegenstand definiert. Insbesondere wird der Punkt beobachtet, der sich am nächsten zum Turm, bspw. basierend auf bevorzugterweise vorarbeiteten Lidardaten, des Turmes, oder basierend auf einer Ist-Form des Turmes, befindet.

Ferner kann das Verfahren mehrere Messungen mindestens eines zweiten Lidarsensors umfassen, der vorzugsweise auch als Solid-State-Lidarsensor ausgebildet ist. Die Messungen finden vor allem zu den gleichen Zeitpunkten wie die Messungen der ersten Lidarsensoren statt.

Der mindestens eine zweite Lidarsensor ist dabei außen an der Windturbine derart angeordnet, dass dieser nicht mit den Rotorblättern mitrotiert. Es handelt sich somit um einen turmfesten Lidarsensor. Der mindestens eine zweite Lidarsensor ist insbesondere an der Gondel und/oder am Turm angeordnet. Vorzugsweise handelt es sich um mehrere zweite Lidarsensoren. Insbesondere ist mindestens ein zweiter Lidar-sensor auf einer Unterseite der Gondel angeordnet. Vorzugsweise befinden sich auf der Unterseite der Gondel zwei zweite Lidarsensoren, vor allem auf zwei gegenüberliegenden Seiten des Turmes. Ferner kann sich mindestens ein, insbesondere genau ein, zweiter Lidarsensor auf einer Rückseite der Gondel und/oder auf der Oberseite der Gondel befinden.

Dabei kann der mindestens eine zweite Lidarsensor an der Unterseite der Gondel derart ausgerichtet sein, dass dieser einen Turm der Windturbine entlang dessen gesamter Länge vermessen kann. Der mindestens eine zweite Lidarsensor auf der Oberseite der Gondel ist derart ausgerichtet, dass er die sich rotierenden Rotorblätter vermessen kann. Ferner kann mindestens ein zweiter Lidarsensor auf dem Fundament der Windturbine am Turmfuß angeordnet sein, und zwar derart ausgerichtet, dass dieser den Turm entlang dessen gesamter Länge vermessen kann. Negative Interaktion mit den ersten Lidarsensoren können im Rotorblattbetrieb durch selektives Abschalten der zweiten Lidarsensoren auf dem Fundament erreicht werden.

Ein Vorteil des mindestens einen zweiten Lidarsensors ist dessen relativ sichere Lage, da dieser zuletzt angeströmt wird und dadurch witterungsbedingt weniger negativ beeinflusst wird.

Witterungsbedingungen haben grundsätzlich eine starke Auswirkung auf die Windeigenschaften sowie die Luftdichte, und somit auch auf die Energie der Luftpartikel. Der drehende Rotor entnimmt dem Wind kinetische Energie. Nach dieser Energieentnahme stehen nachgelagerte Strukturen weniger der Strömung entnehmbare Energie zur Verfügung. Dieser Effekt wird dadurch verstärkt, dass der Rotor den Wind im Nahfeld turbulenter macht. Die Platzierung der Sensoren auf Gondelhöhe hat den Vorteil, dass die Anströmungssperrende Wirkung der Gondel auch noch mitgenommen werden kann.

Dabei kann der mindestens eine zweite Lidarsensor die Rotorblätter mit integrierten Turmeffekten wahrnehmen. Unter dem Begriff "Turmeffekt" sind vor allem Turmschwingungen zu verstehen, die ebenfalls aus der Einwirkung entsprechender Kräfte, analog zu den Rotorblättern, aus den Turmeigenschaften, dem Betrieb der Windturbine und den Umgebungseinflüssen resultieren. Der Begriff "Turmeigenschaft" beschreibt insbesondere Eigenschaften, wie bspw. die Massen- oder Steifigkeitsverteilung, von denen sich das zu erwartende strukturdynamische Verhalten des Turmes ableiten lässt. Da der mindestens eine zweite Lidarsensor stärker zum Turm gekoppelt ist, kann dieser zur Eliminierung nicht erwünschter Turmeffekte, beispielsweise einer Verfälschung der Kalibrierung aufgrund nicht vernachlässigbarer Turmschwingungen, eingesetzt werden.

Das Verfahren umfasst insbesondere die vorherige Definition mindestens eines Windturbinenzustandes, wobei ein Windturbinenzustand durch mindestens einen Umgebungszustand und mindestens einem Betriebszustand definiert wird. Der Umgebungszustand umfasst insbesondere einen Windzustand, wobei der Windzustand eine Richtung und/oder eine Turbulenzintensität und/oder eine Winddrehung über der Höhe und/oder eine mittlere Geschwindigkeit und/oder eine Scherung des Windes umfasst. Die Richtung ist insbesondere in Bezug auf die Windturbine zu verstehen. In anderen Worten ist hierunter zu verstehen, unter welchem Winkel der Wind auf die Windturbine einwirkt, sprich insbesondere, ob der Wind von vorne, seitlich oder von hinten auf die Rotorblätter trifft. Die Winddrehung über der Höhe, d.h. einer Entfernung vom Boden, ist insbesondere bei flexiblen Strukturen, wie die Rotorblätter es sind, wichtig.

Ferner kann der Umgebungszustand einen Wellengangzustand umfassen. Dabei handelt es sich bei der Windturbine insbesondere um eine Offshore-Windturbine. Der Wellengangzustand beschreibt insbesondere eine dreidimensionale Ausbreitungsgeschwindigkeit und ein Höhenprofil der Ausbreitungsgeschwindigkeit des Wellengangs.

Der Betriebszustand kann insbesondere einen Pitchzustand des Rotorblattes und/oder eine Rotordrehzahl der Windturbine und/oder eine Leistung der Windturbine umfassen. Unter dem Begriff "Pitchzustand" ist insbesondere ein Pitchwinkel und/oder eine Pitchrate und/oder eine Pitchbeschleunigung zu verstehen. Ferner kann der Betriebszustand einen Blattzustand umfassen, wobei dieser beschreibt, ob sich das jeweilige Rotorblatt in einem Flapwise, Edgewise oder Torsionszustand befindet. Bei einem Flapwise-Blattzustand wird ein Blatt dominant in Schlagrichtung beansprucht, bei einem Edgewise-Blattzustand hingegen dominant in Schwenkrichtung.

Die Rotordrehzahl der Windturbine kann als Mittelwert der Drehzahlen der Rotorblätter aufgefasst werden. Durch die oben genannten Parameter kann ein Windturbinenzustand möglichst genau beschrieben werden. Ein Beispiel wäre, dass sich die Rotorblätter in einer Schlagrichtung dominanter Beanspruchung befinden und der Wind von vorne auf die Rotorblätter drückt.

Die oben genannten Umgebungszustände und Betriebszustände können in allen möglichen Einzel- oder Mehrfachkombinationen miteinander kombiniert werden, um einen Windturbinenzustand zu definieren. Besonders bevorzugt wird für alle möglichen Kombinationen ein Windturbinenzustand definiert, sodass sämtliche Möglichkeiten eines Zustands, in der sich eine Windturbine befinden kann, abgedeckt sind.

Insbesondere werden die Lidardaten nach Ermittlung vorverarbeitet. Die Vorverarbeitung umfasst insbesondere die Transformation der Lidardaten unterschiedlicher Lidarsensoren, insbesondere aller ersten und/oder zweiten Lidarsensoren, in ein gemeinsames Koordinatensystem. Es kann somit eine gemeinsame Punktwolke erhalten werden. Dabei wird ausgenutzt, dass die genaue Positionierung, die Ausrichtung in Hinblick auf die Rotorblätter und somit die dynamische Erfassung des Sichtfeldes der Lidarsensoren bekannt ist.

Dabei werden vor allem die Lidardaten der Lidarsensoren in ein gemeinsames Koordinatensystem transformiert, die dasselbe Rotorblatt aufgenommen haben. Es können ferner die Lidardaten aller Lidarsensoren transformiert werden. Ferner kann zuvor eine Kalibrierung und Filterung der Lidardaten vorgenommen werden, vorzugsweise in Abhängigkeit vom Windturbinenzustand.

Ferner kann die Vorverarbeitung der Lidardaten eine Kreuzkorrelation der Lidardaten aller erster Lidarsensoren mit den Lidardaten der zweiten Lidarsensoren vorsehen, um Anteile der Lidardaten der ersten Lidarsensoren, die zum Beispiel auf einer Schwingung des Turmes beruhen, herausrechnen zu können. Auch hier wird das Wissen um die genaue Positionierung, der Ausrichtung in Hinblick auf die Rotorblätter und somit die dynamische Erfassung des Sichtfeldes der Lidarsensoren genutzt. So kann in den Lidardaten der ersten Lidarsensoren erkannt werden, ob mindestens einem Segment zumindest einem Bereich des Turmes zugeordnet werden kann. Dabei kann es sich bei einem Segment um einen Bereich der Lidardaten handeln, dessen Form einer Form des Turmes entspricht. Es wird die Form oder in anderen Worten das Muster des Turmes in den Lidardaten gesucht, was zur Erkennung entsprechender dem Turm zuzuordnender Segmente führt.

Nach einer Koordinatentransformation der Lidardaten der ersten Lidarsensoren und denen der zweiten Lidarsensoren in ein gemeinsames Koordinatensystem können die oben beschriebenen, dem Turm zuzuordnenden Segmente mit entsprechenden Segmenten aus anderen, insbesondere turmfesten, Lidarsensoren korreliert werden. So wird die Zuordnung der Segmente zum Turm sozusagen verifiziert. Die Segmente, die dem Turm zugeordnet werden können, werden im Anschluss insbesondere eliminiert. Dies geschieht vor allem durch Löschung der entsprechenden Punkte aus den Lidardaten der ersten Lidarsensoren.

Das Verfahren umfasst vor allem eine Einschätzung des aktuell vorliegenden bzw. zur Aufnahme der Lidardaten herrschenden Windturbinenzustands. Für die Einschätzung werden aktuelle Werte mindestens eines Windturbinenparameters, insbesondere mindestens eines Betriebszustandes und/oder mindestens eines Umgebungszustandes, berücksichtigt. Diese aktuellen Werte werden im Folgenden auch Windturbinendaten bezeichnet.

Das Verfahren umfasst erfindungsgemäß ein Ermitteln einer Ist-Form des Rotorblattes basierend auf mindestens einer Annäherungsfunktion. Bei der Annäherungsfunktion handelt es sich vor allem um Eigenformen des Rotorblattes. Jede Struktur, bspw. jedes Rotorblatt und der Turm der Windturbine, reagiert auf äußere Anregung, bspw. durch Wind oder Wellen, in einer bestimmten Frequenz mit eigenen Schwingungen, und zwar abhängig von der Frequenz der Anregung. Jede Struktur hat dabei sogenannte Eigenfrequenzen. Dies sind die Frequenzen, in denen die Struktur schwingt, wenn diese ausgelenkt und sich selbst überlassen wird. Den Eigenfrequenzen kann jeweils eine Eigenform zugeordnet werden. Das ist die Form, die die Struktur annehmen würde, wenn diese sich bei Anregung selbst überlassen werden würde. Im vorliegenden Fall ist insbesondere die erste Eigenfrequenz relevant, deren zugehörige erste Eigenform im Wesentlichen aus einer Biegeverformung des Turmes besteht. Sie wird daher auch "erste Biegeeigenfrequenz" genannt. Die zugehörige Eigenform ist die "erste Biegeeigenform". Darüber hinaus könnten auch die zweite und/oder dritte Eigenfrequenz und die entsprechende Eigenform relevant sein. Erfindungsgemäß wird als Annäherungsfunktion die erste und/oder zweite und/oder dritte Eigenform verwendet.

Die Auswahl der mindestens einen Annäherungsfunktion erfolgt insbesondere in Abhängigkeit vom Windturbinenzustand. Ferner kann die Auswahl in Abhängigkeit einer Zielsetzung stattfinden. Das Annähern kann bspw. unter der Zielsetzung einer Vermeidung einer Kollision des Rotorblattes und des Turmes, in anderen Worten der Sicherstellung eines ausreichenden Turmfreigangs stattfinden. In einem solchen Fall wird vor allem die erste Eigenform zur Annäherung verwendet, da diese das Blatt derart annähert, dass der minimale Abstand zum Turm der Ist-Form größer ist als bei den anderen Eigenformen. Dabei wird die erste Eigenform insbesondere durch den Punkt der Lidardaten gelegt, der sich am nächsten zum Turm befindet, da die Abschätzung dann am konservativsten und somit am sichersten ist. Ein weiterer Punkt ist das Ende des jeweiligen Punktes des Rotorblattes an der Nabe. Der Abstand zum Turm ist aufgrund des Verlaufs der ersten Eigenform dann stets mindestens dem Abstand der Lidardaten zum Turm.

Mindestens ein zu beobachtender Punkt wird erfindungsgemäß basierend auf der Ist-Form festgelegt. Der zu beobachtende Punkt wird nicht auf den Lidardaten, sondern auf der daraus ermittelten Ist-Form, definiert. Insbesondere wird der Punkt des Rotorblattes, insbesondere auf der Ist-Form, beobachtet, der am nächsten zum Turm ist, entweder zu entsprechenden bevorzugterweise vorverarbeiteten Lidardaten des Turmes oder zu einer entsprechenden Ist-Form des Turmes. Die Annäherung sorgt vorzugsweise dafür, dass die Ist-Form des Rotorblattes dem Turm bzw. dessen Lidardaten oder Ist-Form näherkommt, als die Lidardaten des Rotorblattes. Die Annäherung, insbesondere mittels der ersten Eigenform, ist in dem Sinne konservativer und schafft zusätzliche Sicherheit, da man bspw. trotz einer möglichen Ungenauigkeit hinsichtlich der Messdaten oder einer möglichen plötzlichen zeitlichen Entwicklung sicher sein kann, dass ein Mindestwert hinsichtlich des Turmfreigangs nicht unterschritten wird.

Bei der Ermittlung der Ist-Form kann vor der Annäherung nach der Form bzw. des Musters des Rotorblattes in den Lidardaten gesucht werden. Es können dabei, um einen monotonen Verlauf der Form zu erreichen, zu einer erkannten Form Punkte aus der Punktwolke ergänzt werden. Insbesondere wird eine Interpolationsfunktion in einen Bereich, in dem Punkte ergänzt werden soll, gelegt und auf Basis derer Position Punkte aus den Lidardaten ergänzt und/oder neue Punkte hinzugefügt. Dabei kann die Interpolation so erfolgen, dass je näher sich ein Bereich, in dem ein Punkt ergänzt werden soll, an den flexiblen Rotorblättern befindet (zum Beispiel im Bereich der Blattspitze) eine umso höhere Ordnung für eine Interpolationsfunktion gewählt werden. Die Mindestordnung der Interpolationsfunktion ist dabei eins. Die Interpolationsfunktion beschreibt dabei die Biegelinie des Rotorblattes. Dabei kann es sich bei den ergänzten Punkten vor allem um Stützpunkte handeln. Wenn bspw. nur ein Punkt, bspw. an der Blattspitze betrachtet wird, dann werden Stützpunkte zwischen der Blattwurzel und diesem Punkt (entsprechend der mit nur einem Punkt auf der Blattspitze rekonstruierbaren Interpolationsfunktion in anderen Worten Biegelinie aus den Lidardaten ergänzt und/oder neue Punkte hinzugefügt.

Die sich ergebenden Lidardaten, in anderen Worten die entsprechende 3D-Punktwolke, gewährleisten einen mindestens einmal stetig differenzierbaren Verlauf des Rotorblattes. Auch wird aufgrund der zeitlichen Verfolgung der Lidardaten ein sprungfreier zeitlicher Verlauf der 3D-Punktwolke und somit letztendlich eine Schätzung der Rotorblattbewegung im Sinne einer monotonen Rekonstruktion der Bewegung, insbesondere aller Rotorblätter, ermöglicht. Dabei kann ebenfalls, insbesondere auf Basis der Windturbinenparameter, eingeschätzt werden, wie sich die Bewegung der Rotorblätter in Zukunft verändern könnte, bspw. daran wie stabil Windturbinenparameter derzeit sind oder sich kurz zuvor verändert haben.

So entstehen ergänzte Lidardaten, die dann mithilfe der mindestens einen Annäherungsfunktion angenähert werden können, um die Ist-Form zu bestimmen. Die Annäherung dient insbesondere dazu die weiteren Schritte des Verfahrens zu vereinfachen, da diese nur unter hohem Aufwand mit den tatsächlichen Lidardaten durchgeführt werden könnten. In anderen Worten ermöglicht die Ist-Form eine gezielte Systemordnungsreduktion und letztendlich eine Vereinfachung des Verfahrens.

Bevor eine Ist-Form aus den Lidardaten ermittelt, vor allem entnommen, wird, kann das Verfahren eine Segmentierung der Lidardaten des mindestens einen Lidarsensors für das mindestens eine Rotorblatt umfassen. Dabei werden die Lidardaten in unterschiedliche Segmente aufgeteilt, wobei die Ist-Form des Rotorblattes segmentweise, insbesondere basierend auf einer jeweiligen Annäherung pro Segment, ermittelt werden kann.

Das Verfahren umfasst ferner bevorzugt das Festlegen mindestens eines zu beobachtenden Punktes, und zwar vorzugsweise auf der zuvor ermittelten Ist-Form. Insbesondere kann festgelegt werden, dass der Punkt beobachtet wird, der sich am nächsten zum Turm, insbesondere am nächsten zu bevorzugterweise vorverarbeiteten Lidardaten oder einer Ist-Form des Turmes, befindet. Es kann somit auf der Ist-Form ermittelt werden, welcher Punkt dies ist und auf Basis dieses Punktes, bspw. der Abstand zum Turm, ermittelt werden. Insbesondere kann pro Segment mindestens ein, am meisten bevorzugt genau ein, zu beobachtender Punkt festgelegt werden. Ferner können pro Segment mehrere Punkte festgelegt werden. Die Beobachtung mehrerer, vor allem in der Breite verteilten Punkte können innerhalb eines Segments zu Hinweisen auf die lokale Torsion herangezogen werden.

Vorteilhafterweise wird der beobachtete Ist-Strukturzustand mit den entsprechenden Lidardaten verglichen. In anderen Worten wird bestimmt, wie gut die Ist-Form die Lidardaten repräsentiert. Dafür werden insbesondere Residuen an verschiedenen Stellen des Blattes in entsprechenden Blattschnitten in Querrichtung ermittelt. Bei den Residuen handelt e sich vor allem um die Abweichung zwischen den Lidardaten und der durch Annäherung ermittelten Ist-Form. Dies dient insbesondere einer Anpassung der Auswahl der Annäherungsfunktionen und/oder der Annäherungsfunktionen an sich und/oder der Definition der Windturbinenzustände. In anderen Worten ist dies eine Überprüfung der vorher getroffenen Annahmen.

Insbesondere wird für jeden der zu beobachtenden Punkte der Ist-Strukturzustand zeitlich getrackt, d.h. über die Zeit aufgetragen, sodass eine Trajektorie des Ist-Strukturzustandes erstellt wird. Insbesondere wird einer, insbesondere mehrere, am meisten bevorzugt alle, den Ist-Strukturzustand definierende Parameter getrackt.

Es kann mindestens eine Einflussgröße zur Steuerung der Windturbine hergeleitet werden. Dies basiert insbesondere aus des Ist-Strukturzustandes des mindestens einen zu beobachten Punktes. Es kann insbesondere auch die hergeleitete Einflussgröße getrackt werden und somit als Ist-Einflussgröße beispielsweise mit einer Soll-Einflussgröße beziehungsweise einem Sollbereich verglichen werden und bei einer vordefinierten Abweichung mittels Steuerung der Windturbine eingegriffen werden.

Zudem kann die Ist-Form schnittweise betrachtet werden. Dabei sind insbesondere Schnitte in einer Querrichtung zur Längsrichtung des Rotorblattes zu verstehen. Die Schnitte können ferner bevorzugt ebenfalls getrackt werden. Es können somit die Ist-Strukturzustände der Punkte des entsprechenden Schnittes beobachtet werden. Insbesondere kann die Auslenkung der Punkte beobachtet werden. Durch die Festlegung von Schnitten und der Verfolgung deren jeweiligen Auslenkung können globale Vorgänge (bspw. die globale Torsion) über das gesamte Blatt ermittelt werden. Es kann somit eine Verdrehung des Rotorblattes und letztendlich die tatsächlich stattfindenden Torsionsvorgänge bestimmt werden.

Ferner können nicht vernachlässigbare Änderungen in dem Biegeverhalten, die bspw. durch die erste Eigenform beschrieben wird, wahrgenommen werden. Dazu kann ebenfalls die schnittweise Betrachtung herangezogen werden. Es kann dabei vor allem die Lidardaten mit der Ist-Form verglichen werden. Dabei kann der Windturbinenzustand berücksichtigt werden. Bei Vorliegen eines bestimmten Windturbinenzustands könnte z.B. ein veränderter Verlauf der Lidardaten im Vergleich zur ersten Inbetriebnahme der Windturbine feststellbar sein, woraus eine starke Materialermüdung geschlossen werden könnte.

Ebenfalls wäre bei kurzzeitiger Veränderung der Blattoberfläche (zum Beispiel im Fall eines Eis-Ansatzes) ein verändertes Schwingungsverhalten vor allem an den flexibelsten Stellen des Rotorblattes bspw. an der Rotorblattspitze wahrnehmbar. Dies wäre ebenfalls über eine Beobachtung des Ist-Strukturzustandes, insbesondere der Auslenkung, von entsprechenden Punkten des Rotorblattes in dem Bereich der Blattoberflächenveränderung zu erkennen.

Ferner lassen sich Effekte wahrnehmen, die sich relativ langsam verändern, bspw. die Windrichtung oder Windscherung. Beispielweise erzeugt ein quasi-stationärer Winddruck eine teilweise rotorposition-winkelunabhängige Ausrichtung der flexiblen Stellen des Blattes (z.B. der Rotorblattspitze). Dies könnte über eine Beobachtung der Ist-Strukturzustände, vor allem der Auslenkung, der entsprechenden Punkte auf dem Rotorblatt ermittelt werden. Die so ermittelten Effekte könnten über alle Rotorblätter aufsummiert werden, was eine Erfassung einer globalen Windrichtung (zumindest erstmal im Sinne der betrachteten Windturbine) erlaubt.

Das Verfahren kann insbesondere das Ermitteln von Lidardaten hinsichtlich des Turmes umfassen. Dabei können die Lidardaten in Bezug auf den entsprechend vorverarbeitet werden, sodass ein mindestens einmal stetig differenzierbarer Verlauf des Turmes vorliegt.

Ferner kann das Verfahren das Ermitteln einer Ist-Form des Turms umfassen. Und zwar können hierzu ebenfalls mehrere Messungen mindestens eines zweiten Lidarsensors zur Ermittlung, insbesondere Gewinnung, von Lidardaten eingesetzt werden. Ferner kann das Verfahren das Beobachten eines Ist-Strukturzustandes mindestens eines Punktes eines Turms der Windturbine umfassen. Dabei wird der Ist-Strukturzustand ebenfalls vorzugsweise durch eine Auslenkung des Punktes gegenüber einer Normalposition und/oder eine Geschwindigkeit des Punktes und/oder eine Beschleunigung des Punktes definiert.

Sämtliche oben beschriebenen Schritte können analog zu dem Turm durchgeführt werden. Auch in Bezug auf den Turm kann das Verfahren ein Ermitteln einer Ist-Form des Turms aus den Lidardaten umfassen, wobei dieser, wie oben analog zu dem Rotorblatt beschrieben, angenähert werden kann. Ferner kann auch hier eine Segmentierung vorgenommen werden. Zudem kann mindestens ein zu beobachtender Punkt und zwar vorzugsweise basierend auf der ermittelten Ist-Form oder den Lidardaten festgelegt werden. Bei dem Punkt kann es sich erneut bevorzugt um den Punkt des Turmes bzw. dessen Ist-Form handeln, der sich am nächsten zu einem der Rotorblätter, insbesondere am nächsten zu den entsprechenden Ist-Formen, befindet. Ist dieser Punkt auf den Lidardaten oder der Ist-Form des Turmes ermittelt und der entsprechende Punkt auf der Ist-Form der Rotorblätter ebenfalls, kann somit der Ist-Turmfreigang ermittelt werden.

Auch kann das Verfahren einen Vergleich des Ist-Strukturzustandes mit den entsprechenden Lidardaten und gegebenenfalls eine Anpassung der Definition des Windturbinenzustandes in Bezug auf den Turm umfassen. Auch kann der Ist-Strukturzustand des Punktes des Turmes zeitlich getrackt werden und eine entsprechende Trajektorie erstellt werden. Es kann, insbesondere in Zusammenschau mit den entsprechenden Daten hinsichtlich des mindestens einen zu beobachtenden Punktes eines Rotorblattes, eine Einflussgröße zur Steuerung der Windturbine hergeleitet werden. Vorteilhafterweise ist eine Einflussgröße zur Steuerung der Windturbine ein Ist-Turmfreigang der Windturbine. Der Ist-Turmfreigang wird insbesondere aus der Differenz mindestens einer Auslenkung des beobachteten Ist-Strukturzustandes mindestens eines Punktes des Turmes und mindestens einer Auslenkung des beobachteten Ist-Strukturzustandes des mindestens einen Punktes des Rotorblattes ermittelt. Dabei werden Ist-Strukturzustände des Punktes des Rotorblattes und des Punktes des Turms berücksichtigt, die auf zeitgleich ermittelten Literaten basieren. Insbesondere wird der Turmfreigang getrackt, in anderen Worten wird dieser regelmäßig ermittelt und insbesondere mit einem Soll-Turmfreigang als Sollwert beziehungsweise einem Soll-bereich verglichen.

Unter dem Begriff "Turmfreigang" ist vor allem ein minimaler Abstand zwischen einem Punkt der Oberfläche des Turmes und einem Punkt der Rotorfläche des Rotors zu verstehen. In anderen Worten stellt der Turmfreigang den minimalen Abstand zwischen der Turmoberfläche und der Rotorfläche, als umfassend die Oberfläche aller Rotorblätter, dar. Dabei muss es sich bei dem Punkt der Rotorfläche nicht unbedingt um die Rotorblattspitze handeln, da sich das Rotorblatt je nach Windturbinenzustand auch in der Mitte durchbiegen kann. Es kann daher bevorzugt der Punkt auf dem Turm, bevorzugt basierend auf den Lidardaten oder der Ist-Form, beobachtet werden, der sich am nächsten zu den Rotorblättern, d.h. zur Rotorfläche, befindet, während hinsichtlich der Rotorblätter auch jeweils der Punkt beobachtet wird, der sich am nächsten zum Turm befindet. In anderen Worten werden die beiden Punkte auf den entsprechenden Ist-Formen beobachtet, deren Abstand minimal wird und auf diese Weite der Ist-Turmfreigang bestimmt.

Auch die mindestens eine Einflussgröße kann beobachtet und getrackt werden. Es wird somit eine Trajektorie erstellt, auf Basis derer die zeitliche Entwicklung der Einflussgröße beobachtet werden kann. Ermöglicht wird hierdurch eine Echtzeit-Beobachtung von Ist-Strukturzuständen und vorzugsweise einer daraus abgeleiteten Einflussgröße. Es kann ferner auch eine zeitliche Vorhersage einer Entwicklung des Ist-Strukturzustandes und/oder einer Einflussgröße auf Basis der Beobachtung, insbesondere der Trajektorie, erfolgen. Es kann somit vorab eingeschätzt werden, wie sich ein Ist-Strukturwert und/oder eine daraus hergeleitete Einflussgröße zeitlich verändern werden und somit möglichst prädiktiv eingegriffen werden. Dabei fließt insbesondere die Schätzung der Bewegung der Rotorblattblätter und eine entsprechende Vorhersage der Bewegung mit ein.

Insbesondere umfasst das Verfahren eine Definition eines entsprechenden Sollwertes oder Sollbereiches der Einflussgröße, wobei durch eine Regelung ein Erreichen und Einhalten des Sollwertes bzw. des Sollbereichs erreicht wird. Es kann somit eine Echtzeitregelung der Einflussgrößen erreicht werden. Die Regelung wird vorzugsweise durch eine aktive Steuerung der Windturbine erreicht.

Das Verfahren kann daher eine Einstellung und/oder Regelung des Turmfreigangs, insbesondere eine Echtzeit-Regelung, umfassen um somit einen Soll-Turmfreigangs im Rahmen eines Wertes oder Bereichs, in anderen Worten eines Mindestabstands, einzuhalten. Die Regelung wird vorzugsweise durch eine aktive Steuerung der Windturbine, und zwar durch eine Verstellung mindestens eines Pitchwinkels eines Rotorblattes mittels der Pitchverstelleinheit erreicht.

Die Einhaltung eines vorgegebenen Mindestabstandes zwischen den Rotorblättern und dem Turm einer Windturbine, das heißt das Einhalten eines Sollwertes beziehungsweise das Bleiben in einem Soll-Bereich hinsichtlich des Ist-Turmfreigangs, ist maßgeblich hinsichtlich der Herstellung, der Zertifizierung und des Betriebes von Windturbinen und einer der wichtigsten Sicherheitsfunktionen. Da auf Basis des oben beschriebenen Verfahrens eine Echtzeitmessung beziehungsweise Echtzeitbeobachtung des Ist-Turmfreigangs möglich ist, können bestehende Windturbinen vorteilhafterweise gesteuert werden. Neue Windturbinen können daher weniger konservativ entworfen werden. In anderen Worten wird ein turmfreigangsneutrales Windturbinendesign ermöglicht.

Beispielweise können bei Einstellung und Regelung des Turmfreigangs Windturbinen nach Erreichen der anfangs geplanten Lebensdauer, bei nahezu gleicher Energieausbeute weiter zu betrieben werden. Auch wird ermöglicht, dass Windturbinen innerhalb deren Lebensdauer bei schwierigeren Windverhältnisse als bei der Errichtung angenommen mit nahezu gleicher Energieausbeute betrieben werden können.

Ferner ermöglicht das Erreichen und die Regelung eines vorgegebenen Turmfreigangs (gepaart mit der Beobachtung der Ist-Strukturzustände) Kenntnisse über die Strömung in einem Windpark zu gewinnen und darüber eine übergreifende lastenschonende Parkregelung zu erreichen. Vorteile wären dabei z.B.: eine Schonung der Rotorblätter bzw. eine aktive Schonung bestimmter Windturbinen und letztendlich darüber z.B. eine frühe Wartung zu vermeiden und Kosten zu sparen.

Auch eine Versteifung der Rotorblätter, wie sie im Stand der Technik generell zur Einhaltung eines Mindestabstandes zwischen dem Turm und der Rotorfläche eingesetzt wird, wird nicht benötigt. Somit können auch die damit einhergehenden Nachteile, wie die zusätzliche Masse, die durch die nachgelagerte Gesamttragstruktur, beispielsweise der Nabe und dem Turmfundament, aufgenommen werden muss, und die entsprechende Kostenerhöhung vermieden werden.

Auch bildet der Ist-Turmfreigang die aktuelle Situation bei der entsprechenden Windturbine optimal ab. Normalerweise werden bei der Windturbinenauslegung Reihen von Windfeldern simulativ verwendet. Die statistische Verteilung dieser Windfelder überdeckt sich in vielen Fällen nicht mit den tatsächlichen Winden an den jeweiligen Standorten der Windturbinen. Die Windfelder haben jedoch eine starke Auswirkung auf den tatsächlichen Turmfreigang. Dadurch, dass vorliegend eine Echtzeitbeobachtung des Turmfreigangs möglich ist, kann diese Lücke zwischen Simulation und den Feldeffekten, das heißt der eigentlichen Situation auf dem Feld, geschlossen werden, indem aktiv ein einstellbarer Mindestabstand zwischen Turm und Rotorfläche trotz unterschiedlicher Winde eingehalten werden kann. Es kann eine anströmungsunabhängige Einhaltung eines Mindestabstandes zwischen Turm und Rotorfläche erreicht werden. Da somit ein turmfreigangssicherer Modus erreicht werden kann, da der Turmfreigang effektiv und sicher überwacht wird, kann ein "Powerboost" stattfinden. Die Turbine kann mehr Energie aus dem Wind entnehmen und entsprechend mehr als normalerweise ins elektrische Netz einspeisen.

Insbesondere kann zeitlich die Annäherung und somit die Ermittlung der Ist-Form überprüft werden. Dadurch dass vorzugsweise zu verschiedenen Zeitpunkten Lidardaten ermittelt werden, kann auf Basis der entsprechend aktuelleren Lidardaten eine erneute Annäherung der Ist-Form durchgeführt werden, wobei diese anders als zuvor ausfällt. Ferner kann bspw. auf Basis einer bereits ermittelten Einflussgröße, bspw. des Ist-Turmfreigangs, die Auswahl der mindestens einen Einflussgröße für die Annäherung der entsprechenden oder der nächsten Lidardaten angepasst werden. Ist der Ist-Turmfreigang bspw. bereits sehr klein und daher sehr nach am Sollwert oder am unteren Ende des Sollbereichs, kann eine konservativere Auswahl erfolgen. Bspw. kann in einem solchen Fall die Ordnung der Annäherungsfunktion verringert werden. Ferner kann festgelegt werden, dass dann stets die erste Eigenform zur Annäherung verwendet wird.

Eine weitere mögliche Einflussgröße, die zur Steuerung der Windturbine aus der Beobachtung des Ist-Strukturzustandes des mindestens einen zu beobachtenden Punktes ermittelt werden kann, ist die Rotordrehzahl, insbesondere die vierte Harmonischen der Rotordrehzahl. Letztere ist öfter ein Hinweis auf Nachlaufeffekte, auch "wake" genannt, die insbesondere dann relevant sein können, wenn die Windturbine Teil eines Windparks ist. Bei einem "wake" beeinflusst eine vordere Turbine die hintere im negativen Sinne durch eine Veränderung der Anströmung. Die vierte Harmonische der Rotordrehzahl ist allerdings sichtbarer an den einzelnen Rotorblättern als am gesamten Rotor. Die Rotordrehzahl ist aufgrund der Trägheit des drehenden Systems (d.h. Rotor und Generator) stark tiefpass-filternd. Das Vorhandensein der vierten Harmonischen wird auf Basis des vorliegenden Verfahrens ermöglicht.

Wird das vorliegende Verfahren hinsichtlich mehrerer Windturbinen eines Windparks realisiert, kann durch ein zeitliches und räumliches Korrelieren der Lidardaten hinsichtlich verschiedener Windturbinen eine Quantifizierung der Wake-Effekte ermöglicht werden. Dadurch wäre es möglich Betriebsmodi auf Windparkebene so einzustellen, dass der Windpark insgesamt leistungs- und lastenoptimaler betrieben wird. Es somit eine Strukturbeanspruchung-anhängige Betriebsführung des Windparks erreicht werden. Diese gewonnenen Windparkinformationen können wiederum bei Design der Windturbine eingesetzt werden. Auch ließe sich das Repowering entsprechend optimieren.

Vorteilhafterweise umfasst das Verfahren eine Steuerung der Windturbine auf Basis mindestens einer Einflussgröße, wobei die Steuerung eine Änderung eines Steuerparameters umfasst, wobei ein Steuerparameter vorzugsweise ein Betriebszustand der Windturbine ist. Insbesondere kann der Pitch-Zustand jeder der Rotorblätter mittels einer Pitchverstelleinheit angepasst werden. Insbesondere kann der Pitchwinkel individuell für jedes der Rotorblätter angepasst werden, sodass für jedes Rotorblatt ein individueller Steuerparameter geändert werden kann. Dies wird insbesondere im Rahmen eines "individual pitch controls" umgesetzt. Ferner kann kollektiv für alle Rotorblätter der Pitchzustand gemeinsam angepasst werden, insbesondere im Rahmen eines "collective pitch controls".

Ferner können mittels des Verfahrens auch weitere Größen ermittelt werden. Dazu zählen Blatt- oder Rotoranomalitäten und/oder eine Torsion mindestens eines der Rotorblätter, vorzugsweise sämtlicher Rotorblätter, und/oder ein Pitchzustand. Insbesondere wird die Ist-Torsion als Einflussgröße ermittelt und getrackt. Sie kann auch vorhergesagt werden.

Ferner kann die Erfindung eine Windturbine umfassend eine zuvor beschriebene Vorrichtung betreffen. Hierbei handelt es sich vor allem um eine Windturbine mit einer Leistung ab 1 MW. Vorteilhafterweise handelt es sich um eine Schwachwindanlage. Eine Schwachwind-Anlage ist eine Windturbine, die für Standorte mit schwachem Wind, insbesondere für einen Jahreswindmittelwert kleiner 7,5 m/s, gebaut ist. Dies sind bspw. Standorte rund um die Städte haben (u.a. aufgrund der dichteren Bebauung). Gerade bei Schwachwindanlagen ist das Verhältnis von Blattlänge zu Turmlänge auffällig größer (im Vergleich zu Starkwind-Anlagen), sodass gerade bei diesen der die Einhaltung des Turmfreigangs eine besonders große Rolle spielt.

In einem weiteren Aspekt betrifft die Erfindung eine Vorrichtung zum Betreiben mindestens einer Windturbine, wobei die Vorrichtung mindestens einen ersten Lidar-sensor zur Durchführung mehrerer Messungen und daher zur Ermittlung von Lidardaten für die Ermittlung eines Ist-Strukturzustandes mindestens eines Punktes eines Rotorblattes einer Windturbine umfasst. Der Ist-Strukturzustand mindestens eines Punktes ist wie oben beschrieben definiert. Insbesondere umfasst die Vorrichtung mindestens einen zweiten Lidarsensor, am meisten bevorzugt sämtliche erste und zweite Lidarsensoren.

Dabei umfasst die Vorrichtung eine Auswerteeinheit zur Beobachtung des Ist-Strukturzustandes. Die Auswerteeinheit ist vor allem Teil einer Steuereinheit. Neben den Lidardaten der Lidarsensoren kann die Steuereinheit Windturbinendaten und Zielsetzungen für den Betrieb der Windturbine berücksichtigen. Dabei handelt es sich um Echtzeitzielsetzungen, wie zum Beispiel Einschränkungen hinsichtlich der Leistung, der Lasten und/oder einer Pitchverstellung, d.h. einer Änderung des Pitchzustands. Die Vorrichtung kann einen externen Controller umfassen, an denen die Daten der Steuereinheit, insbesondere eine entsprechende Steuerempfehlung, weitergegeben werden. In den externen Controller können auch noch weitere Windturbinendaten einfließen. Der externe Controller ist dazu ausgebildet ein Steuersignal an eine Pitchverstelleinheit der Windturbine zu geben. Ferner kann der externe Controller dazu ausgebildet sein ein Steuersignal an ein Modul zur Generatorregelung und/oder eine Netzeinspeisungsmodul weiterzugeben. Die Auswerteeinheit kann eine Schnittstelle aufweisen, sodass ermittelte Daten bspw. mittels SCADA-Systeme zeitverzögert verarbeitet werden können. Eine Weitergabe an die Pitchverstelleinheit kann, wie oben beschrieben, zur Regelung eines gewünschten Turmfreigangs dienen. Ferner kann, wie oben beschrieben, die Rotordrehzahl ermittelt werden und als Ist-Rotordrehzahl in der Drehzahlregelung, die mittels der Pitchverstelleinheit durchgeführt wird, eingesetzt werden.

Die Vorrichtung umfasst vor allem ein Vorverarbeitungsmodul, in dem die Lidardaten der Lidarsensoren vorverarbeitet werden. Ferner kann sie ein Segmentierungsmodul umfassen, die eine entsprechende Segmentierung unter Berücksichtigung der zuvor definierten Windturbinenzustände vornimmt. In einem Trackingmodul der Vorrichtung können die Ist-Strukturzustände zeitlich getrackt und/oder vorhergesagt werden.

Ferner kann die Vorrichtung ein Strukturzustandsbeobachtungsmodul umfassen, in dem die Ist-Strukturzustände mit den Lidardaten verglichen werden. Auch kann die Vorrichtung ein Modul zur Ermittlung mindestens einer Einflussgröße umfassen, das dazu ausgebildet ist, mindestens eine Einflussgröße zu ermitteln und/oder zu tracken. Ferner kann das Modul die zeitliche Entwicklung von Einflussgrößen vorhersagen. Das Modul kann eine Steuerempfehlung für den externen Controller ausgeben. Erfindungsgemäß ist die Vorrichtung zur Durchführung eines oben beschriebenen Verfahrens ausgebildet.

Ferner umfasst die Erfindung ein Computerprogrammprodukt, das ein computerlesbares Speichermedium umfasst, auf dem ein Programm gespeichert ist, dass es einem Computer ermöglicht, nachdem es in den Speicher des Computers geladen worden ist, ein oben beschriebenes Verfahren zur Klassifizierung von Objekten und/oder zur Distanzmessung, gegebenenfalls in Zusammenspiel mit einer oben beschriebenen Vorrichtung, durchzuführen.

### Kurze Beschreibung der Zeichnungen

Es zeigen in rein schematischer Darstellung
- Figur 1: ein Verfahrensdiagramm eines erfindungsgemäßen Verfahrens;
- Figur 2: eine Frontansicht eines oberen Abschnitts einer Windturbine mit einer erfindungsgemäßen Vorrichtung;
- Figur 3: eine Seitenansicht des oberen Abschnitts der Windturbine mit der erfindungsgemäßen Vorrichtung der Figur 2;
- Figur 4: eine Seitenansicht der gesamten Windturbine der Figuren 2 und 3;
- Figur 5: eine weitere Seitenansicht der Windturbine der Figuren 2 bis 4;
- Figur 6: eine erfindungsgemäße Vorrichtung;
- Figur 7: eine Ermittlung einer Ist-Form eines Rotorblattes basierend auf Lidardaten; und
- Figur 8: eine Regelung des Ist-Turmfreigangs

### Bevorzugte Ausführungsformen der Erfindung

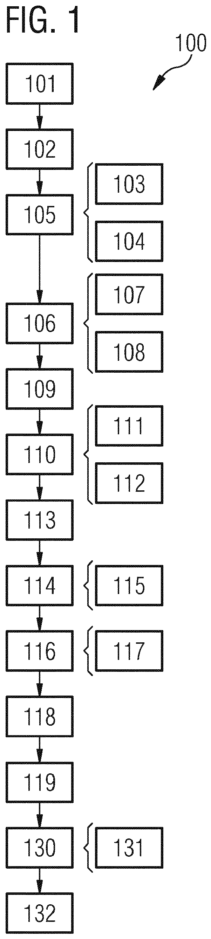

Figur 1 zeigt ein Verfahrensschema eines erfindungsgemäßen Verfahrens 100.

Das erfindungsgemäße Verfahren 100 umfasst insbesondere mehrere Messungen 103 mittels mindestens einem ersten Lidarsensor 11a zur Ermittlung 105 von Lidardaten 17 sowie eine Beobachtung 102 eines Ist-Strukturzustandes mindestens eines Punktes eines Rotorblattes 51 der Windturbine 50, in anderen Worten eines zu beobachtenden Punktes 22, auf Basis der ermittelten Lidardaten 17. Ferner kann das Ermitteln 105 der Lidardaten 17 mehrere Messungen 104 mittels eines zweiten Lidarsensors 11b umfassen.

Zuvor findet vor allem eine Definition 101 mindestens eines Windturbinenzustands 25 statt.

Zur Beobachtung 102 können die Lidardaten 17 vorverarbeitet werden 106. Die Vorverarbeitung 106 kann eine Transformation 107 der Lidardaten 17 unterschiedlicher Lidarsensoren in ein gemeinsames Koordinatensystem umfassen. Ferner kann eine Kreuzkorrelation 108 der Literaten 17 der ersten Lidarsensoren 11a und der Literaten 17 der zweiten Lidarsensoren 11b im Rahmen der Vorverarbeitung 106 stattfinden.

Das Verfahren 100 umfasst insbesondere eine Einschätzung 109 des aktuell vorliegenden Windturbinenzustands, wofür aktuelle Werte mindestens eines Windturbinenparameters, vor allem mindestens eines Betriebszustandes und/oder mindestens eines Umgebungszustandes, berücksichtigt werden.

Ferner kann das Verfahren 100 ein Ermitteln 110 der Ist-Form 20 des Rotorblattes aus die Lidardaten 17 umfassen. Dabei wird die Ist-Form 20 insbesondere mittels mindestens einer Annäherungsform angenähert 111. Zuvor können die Lidardaten 17 segmentiert werden 112. In anderen Worten wird die Ist-Form des Rotorblattes 51 dann segmentweise ermittelt.

Es kann ein zu beobachtender Punkt 22 festgelegt werden. Dies kann auch segmentweise geschehen um vor allem pro Segment 21 einen den Windturbinenzustand 25 beschreibenden relevanten Punkt auf der Ist-Form 20 als zu beobachtenden Punkt 22 festzulegen.

Insbesondere kann das Verfahren einen Vergleich 114 des beobachteten Ist-Strukturzustandes mit den entsprechenden Lidardaten umfassen. Dies kann insbesondere für eine Anpassung 115 der Auswahl der Annäherungsfunktionen, der Annäherungsfunktionen und/oder der Definition des Windturbinenzustands 25 verwendet werden.

Ferner umfasst das Verfahren 100 vorzugsweise ein Tracking 116 des Ist-Strukturzustandes des mindestens einen zu beobachtenden Punktes. Dabei kann eine Trajektorie 23a erstellt werden 117. Ferner kann die Annäherung, d.h. die Auswahl der mindestens einen Annäherungsfunktion, überprüft werden 118.

Ferner kann die Ist-Form des Turmes 52 ermittelt werden 119. Ferner kann der Ist-Strukturzustand mindestens eines Punktes des Turmes 52 der Windturbine 50 beobachtet werden. Dazu können alle oben genannten Schritte durchgeführt werden.

Ferner kann das Verfahren 100 das Herleiten 130 einer Einflussgröße zur Steuerung der Windturbine 50 umfassen. Insbesondere wird ein Ist-Turmfreigang ermittelt 131, insbesondere getrackt. Auf Basis der mindestens einen Einflussgröße wird die Windturbine gesteuert 132.

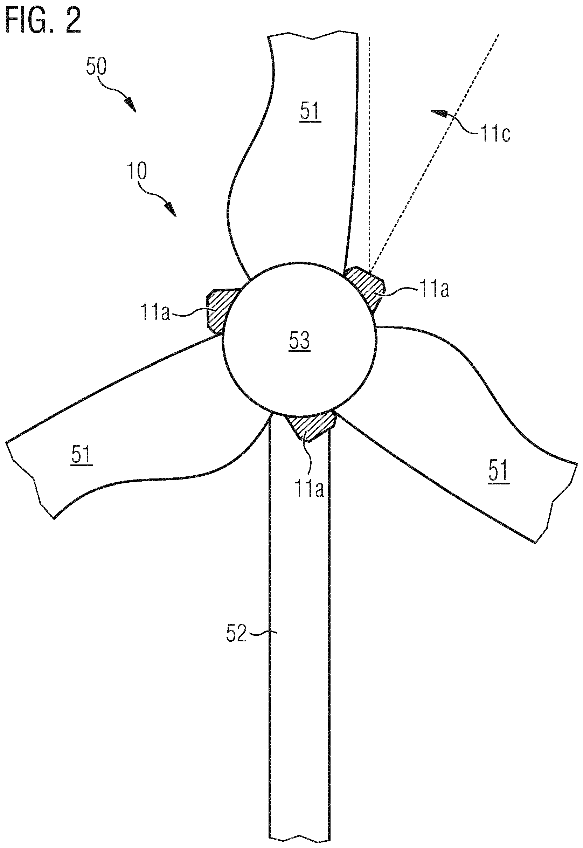

Figur 2 zeigt eine Frontansicht eines oberen Abschnitts einer Windturbine 50 mit einer erfindungsgemäßen Vorrichtung 10.

Die Windturbine 50 umfasst drei Rotorblätter 51, die in Figur 2 nicht in voller Länge dargestellt sind. Die Vorrichtung 10 umfasst erste Lidarsensoren 11a, die derart angeordnet sind, dass sie mit den Rotorblättern 51 mitrotieren. Die ersten Lidarsensoren 11a sind insbesondere zwischen den Rotorblättern 51 der Windturbine 50 angeordnet, und zwar außen auf einer Nabe 53 der Windturbine 50. Bei einem der ersten Lidarsensoren 11a ist der entsprechende Erfassungsbereich 11c in Figur 2 zu sehen. Es ist jeweils einem ersten Lidarsensor 11a ein Rotorblatt 51 zugeordnet, wobei der jeweilige erste Lidarsensor 11a derart ausgerichtet ist, dass er das Rotorblatt 51 vom Wurzelbereich bis zur Blattspitze erfassen kann.

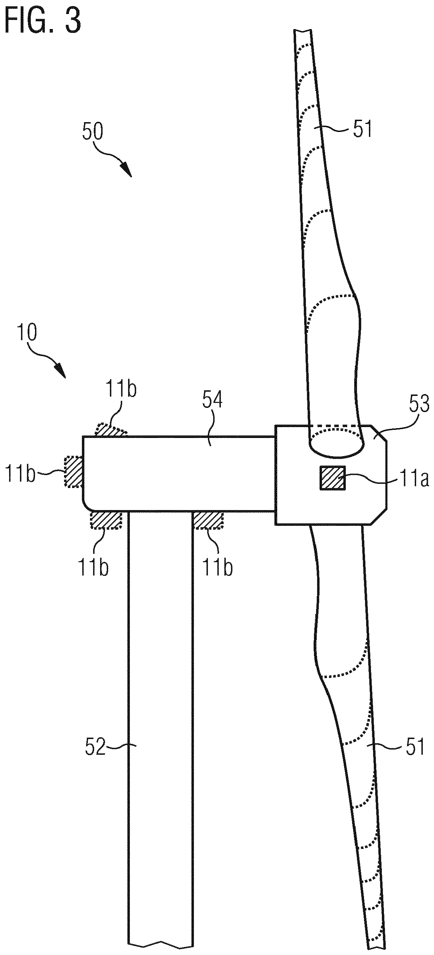

Figur 3 zeigt eine Seitenansicht des oberen Abschnitts der Windturbine 50 mit der erfindungsgemäßen Vorrichtung 10 der Figur 2.

Die Vorrichtung 10 umfasst ebenfalls zweite Lidarsensoren 11b, die derart angeordnet sind, dass sie nicht mit den Rotorblättern 51 mitrotieren. Die zweiten Lidarsensoren 11b sind an der Gondel 54 angeordnet. Dabei ist ein zweiter Lidarsensor 11b auf der Oberseite 54a der Gondel 54, einer auf der Rückseite 54c der Gondel 54 und zwei auf der Unterseite 54b der Gondel 54, und zwar auf jeweils unterschiedlichen Seiten des Turmes 52, angeordnet.

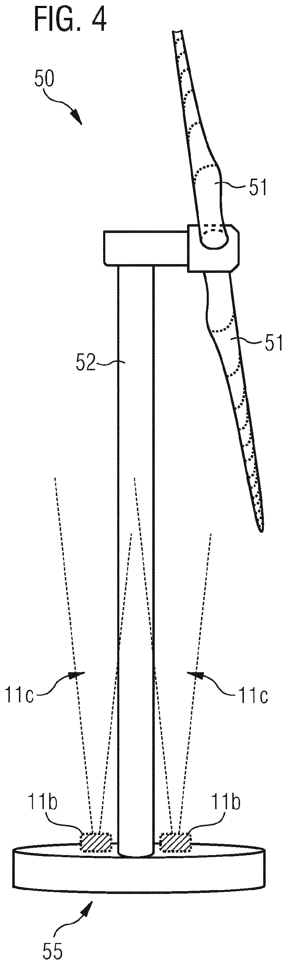

Figur 4 zeigt eine seitliche Ansicht der gesamten Windturbine 50 insbesondere dessen Fundament 55, an dem ebenfalls zwei zweite Lidarsensoren 11b angeordnet sind. Dabei sind die im oberen Abschnitt angeordneten Lidarsensoren in Figur 4 aus Gründen der Übersicht nicht dargestellt.

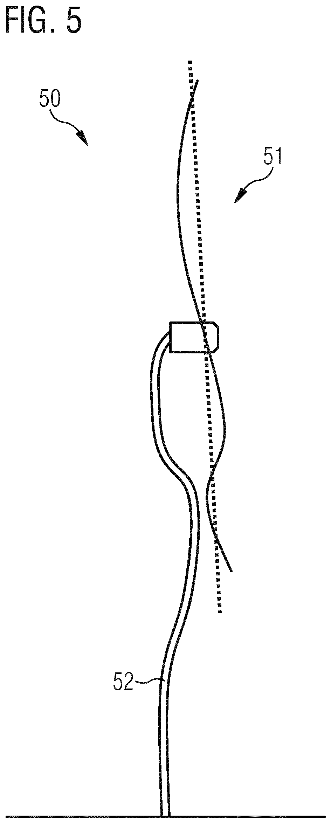

In Figur 5 ist eine noch schematischere weitere Seitenansicht der Windturbine 50 gezeigt, wobei stark überzeichnet dargestellt ist, wie sowohl der Turm 52, also auch die Rotorblätter 51 sich bei einem entsprechenden Betrieb durchbiegen können, wobei deutlich in der Figur zu sehen ist, dass sich dies kritisch auf einen Turmfreigang auswirken kann.

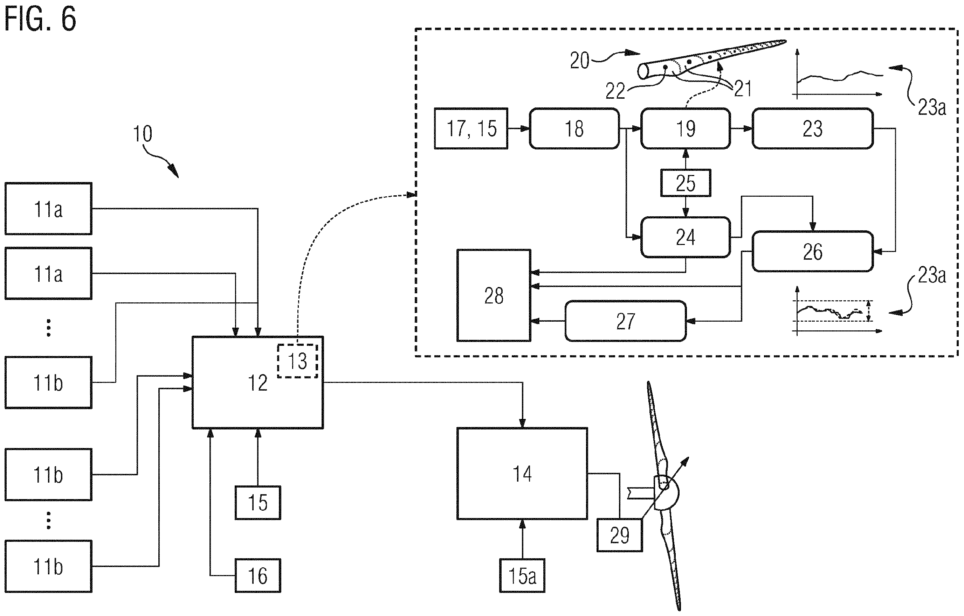

Figur 6 beschreibt eine erfindungsgemäße Vorrichtung 10, die neben den ersten Lidarsensoren 11a und den zweiten Lidarsensoren 11b ferner eine Steuereinheit 12 umfasst. Neben den Lidardaten 17 der Lidarsensoren 11 fließen in die Steuereinheit 12 Windturbinendaten 15 und Zielsetzungen 16 des Betriebs der Windturbine 50 ein. Dabei handelt es sich um Echtzeitzielsetzungen, wie zum Beispiel Einschränkungen hinsichtlich der Leistung, der Lasten und/oder einer Pitchverstellung, d.h. einer Änderung des Pitchzustands.

Die entsprechenden Daten der Steuereinheit 12 werden an einen externen Controller 14 weitergegeben, in denen noch weitere Windturbinendaten 15a einfließen können. Dies können Blattlasten oder die aktuelle eingespeiste Leistung sein. Der externe Controller 14 gibt dann ein Steuersignal an eine Pitchverstelleinheit 29 der Windturbine 50.

Die Steuereinheit 12 umfasst eine Auswerteeinheit 13, die in vergrößerter Darstellung im rechten oberen Teil der Figur 6 gezeigt ist. Dabei fließen in die Auswerteeinheit 13 sowohl Lidardaten 17 also auch Windturbinendaten 15 ein.

In einem ersten Schritt werden in einem Vorverarbeitungsmodul 18 die Lidardaten 17 vorverarbeitet. In einem weiteren Schritt wird in einem Segmentierungsmodul 19 eine entsprechende Segmentierung unter Berücksichtigung der zuvor definierten Windturbinenzustände 25 vorgenommen. Oberhalb des Segmentierungsmoduls 19 ist eine Ist-Form 20 eines Rotorblattes 51 zu sehen, die auf Basis der entsprechenden Lidardaten 17 ermittelt wurde. Zuvor wurde eine Segmentierung durchgeführt, sodass mehrere Segmente 21 zu sehen sind. Ebenfalls ist pro Segment 21 ein zu beobachtender Punkt 22 zu sehen, dessen Ist-Strukturzustand beobachtet wird. In einem Trackingmodul 23 werden die Ist-Strukturzustände zeitlich getrackt. Eine Trajektorie 23a ist oberhalb des Trackingmoduls 23 exemplarisch eingezeichnet.

Parallel zur Segmentierung können im Rahmen eines Strukturzustandsbeobachtungsmoduls 24 die Ist-Strukturzustände mit den Lidardaten verglichen werden. Dies dient einem Abgleich zwischen der herrschenden Realität und den zuvor definierten Windturbinenzuständen und somit einer Optimierung der Definition der Windturbinenzustände.

In einem Modul 26 zur Ermittlung mindestens einer Einflussgröße fließen die Ergebnisse des Trackingmoduls 23 ein. Ferner können die Ergebnisse des Strukturzustandsbeobachtungsmoduls 24 einfließen. Mindestens eine Einflussgröße wird ermittelt und getrackt. Exemplarisch ist eine Trajektorie einer Einflussgröße unterhalb des Moduls 26 dargestellt. Ferner kann das Modul 26 die zeitliche Entwicklung von Einflussgrößen vorhersagen. Auf Basis der Ergebnisse des Moduls 26 zur Ermittlung mindestens einer Einflussgröße werden Steuerempfehlungen 27 ausgegeben, die dann zu dem externen Controller 14 weitergeleitet werden. Ferner können auch weitere Größen 28 ermittelt werden. Dazu zählen eine Feststellung von Rotorblatt- oder Rotoranomalitäten und/oder eine Feststellung der Torsion mindestens eines der Rotorblätter, vorzugsweise aller Rotorblätter, und/oder eine Einschätzung des Pitchzustandes.

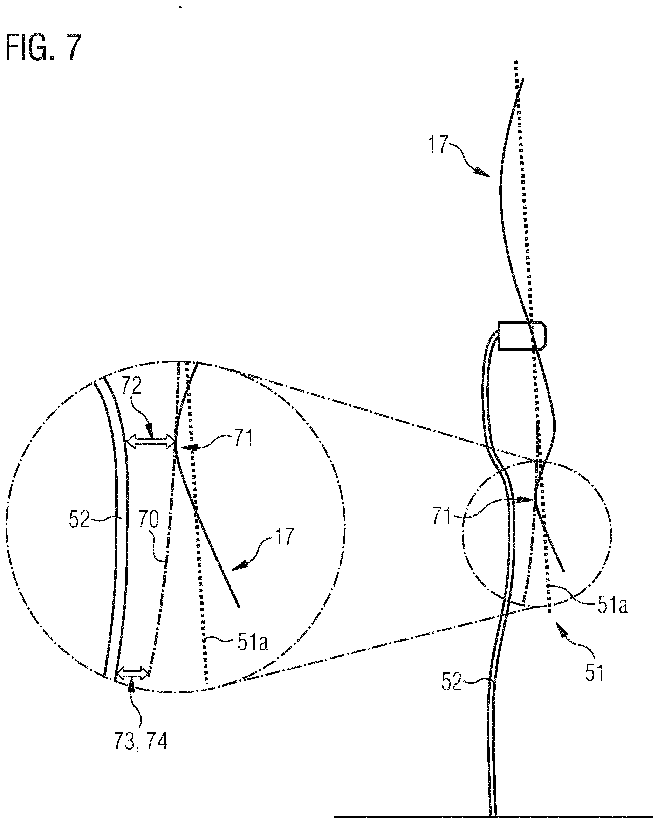

Figur 7 zeigt eine Ermittlung einer Ist-Form 20 basierend auf Lidardaten 17. Dabei ist in Figur 7 eine Windturbine 50 mit entsprechenden Rotorblättern 51 und einem Turm 52 gezeigt. ES ist zu sehen, wie die Lidardaten 17, die ermittelt wurden, von dem eigentlichen Verlauf 51a der Rotorblätter 51 abweichen. Die Ist-Form 20 wird angenähert, und zwar mittels einer Annährungsform, und zwar der ersten Eigenform 70. Diese wird durch das Ende der Rotorblätter 51 gelegt, das sich an die Nabe 53 anschließt, als auch durch den nächsten Punkt 71 der Lidardaten 17 zum Turm 52.

Ferner ist in Figur 7 die entsprechende Lidardaten des Turmes 52 zu sehen. Es ist zu sehen, wie der Abstand 73 zu diesen basierend auf der Ist-Form 20 deutlich geringer ist als der Abstand 72 basierend auf den jeweiligen Lidardaten des Rotorblattes 51. Der Abstand 73 kann als Ist-Turmfreigang 74 definiert werden.

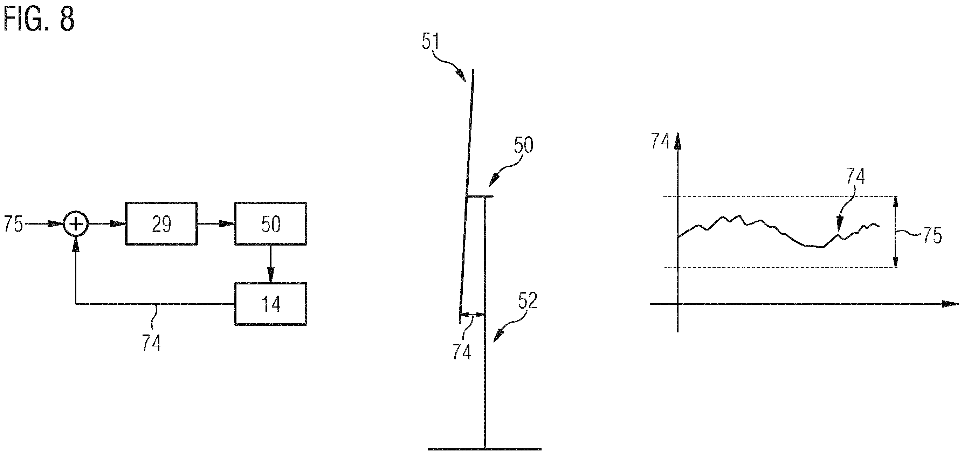

Figur 8 beschreibt die Regelung des Ist-Turmfreigangs 74. Dabei ist Figur 8 in drei Bereiche aufgeteilt. In der Mitte befindet sich schematisch eine Windturbine 50 umfassend Rotorblätter 51 und einen Turm 52, wobei rein schematisch der Ist-Turmfreigang 74 eingezeichnet ist. Auf der rechten Seite ist zu sehen, wie eine Regelung des Ist-Turmfreigangs 74 diesen in einen Sollbereich 75 mit einer oberen und unteren Grenze halten soll. Dabei ist auf der Y-Achse des Diagramms der Ist-Turmfreigang 74 und auf der X-Achse die entsprechende Zeit dargestellt. Auf der linken Seite ist nun gezeigt, wie der Ist-Turmfreigang 74 in einen entsprechenden Regelkreis einfließt. Der Ist-Turmfreigang 74 wird mit dem Sollbereich 75 verglichen. Eine Pitchverstelleinheit 29 kann darauf basierend die Windturbine 50, nämlich den Pitch der Rotorblätter beeinflussen, um den Ist-Turmfreigang 74 zu regeln. Basierend auf weiteren, aktuellen Lidardaten 17 der Windturbine 50 kann der Ist-Turmfreigang 74 mittels der Auswerteeinheit 13 wieder bestimmt werden.

### Bezugszeichenliste

- 100: erfindungsgemäßes Verfahren
- 101: Definition mindestens eines Windturbinenzustands
- 102: Beobachtung eines Ist-Strukturzustandes mindestens eines Punktes eines Rotorblattes der Windturbine
- 103: Messungen mittels mindestens eines ersten Lidarsensors
- 104: Messungen mittels mindestens eines zweiten Lidarsensors
- 105: Ermittlung von Lidardaten
- 106: Vorverarbeitung der Lidardaten
- 107: Transformation in gemeinsames Koordinatensystem
- 108: Kreuzkorrelation der Lidardaten verschiedener Lidarsensoren
- 109: Einschätzen des aktuell vorliegenden Windturbinenzustands
- 110: Ermitteln mindestens einer Ist-Form des Rotorblattes aus den Lidardaten
- 111: Annähern der Ist-Form eines Rotorblattes basierend auf mindestens einer Annäherungsfunktion
- 112: Segmentierung der Lidardaten des mindestens einen Lidarsensors für das mindestens eine Rotorblatt
- 113: Festlegen mindestens eines zu beobachtenden Punktes
- 114: Vergleich eines Ist-Strukturzustandes des zu beobachtenden Punktes mit den Lidardaten
- 115: Anpassung
- 116: Tracking des Ist-Strukturzustandes des mindestens einen zu beobachtenden Punktes
- 117: Erstellen einer Trajektorie
- 118: Überprüfung der Annäherung der Ist-Form
- 119: Ermitteln einer Ist-Form des Turmes der Windturbine
- 130: Herleiten einer Einflussgröße zur Steuerung der Windturbine
- 131: Ermitteln eines Ist-Turmfreigangs
- 132: Steuerung der Windturbine auf Basis der mindestens einen Einflussgröße

- 10: erfindungsgemäße Vorrichtung
- 11a: erster Lidarsensor
- 11b: zweiter Lidarsensor
- 11c: Erfassungsbereich
- 12: Steuereinheit
- 13: Auswerteeinheit
- 14: externer Controller
- 15: Windturbinendaten
- 15a: weitere Windturbinendaten
- 16: Zielsetzungen
- 17: Lidardaten
- 18: Vorverarbeitungsmodul
- 19: Segmentierungsmodul

- 20: Ist-Form
- 21: Segment
- 22: zu beobachtender Punkte
- 23: Trackingmodul
- 23a: Trajektorie
- 24: Strukturzustandsbeobachtungsmodul
- 25: Windturbinenzustand
- 26: Modul zur Ermittlung mindestens einer Einflussgröße
- 27: Steuerempfehlungen
- 28: weitere Größen
- 29: Pitchverstelleinheit

- 50: Windturbine
- 51: Rotorblatt
- 51a: eigentlicher Verlauf des Rotorblattes
- 52: Turm
- 53: Nabe
- 54: Gondel
- 54a: Oberseite der Gondel
- 54b: Unterseite der Gondel
- 54c: Rückseite der Gondel
- 55: Fundament
- 70: erste Eigenform
- 71: nächster Punkt zum Turm
- 72: Abstand zum Turm basierend auf Lidardaten
- 73: Abstand zum Turm basierend auf Ist-Form
- 74: Ist-Turmfreigang
- 75: Soll-Bereich

## Patentansprüche

1. Verfahren (100) zum Betreiben einer Windturbine (50) umfassend mehrere Rotorblätter (51),
wobei das Verfahren (100) mehrere Messungen (103) mittels mindestens eines ersten Lidarsensors (11a) zur Ermittlung (105) von Lidardaten (17) umfasst,
wobei es sich bei dem mindestens einen ersten Lidarsensor (11a) um einen Solid-State-Lidarsensor handelt,
der mindestens eine erste Lidarsensor (11a) außen an der Windturbine (50) derart angeordnet ist, dass der erste Lidarsensor (11a) mit den Rotorblättern (51) der Windturbine (50) mitrotiert,
wobei auf Basis der Lidardaten (17) ein Ist-Strukturzustand mindestens eines Punktes eines Rotorblattes (51) der Windturbine (50) beobachtet wird,
wobei ein Punkt, dessen Ist-Strukturzustand beobachtet wird, als zu beobachtender Punkt (22) bezeichnet wird,
wobei der Ist-Strukturzustand des zu beobachtenden Punktes (22) eine Auslenkung des Punktes gegenüber einer Normalposition und/oder eine Geschwindigkeit des Punktes und/oder eine Beschleunigung des Punktes umfasst, wobei das Verfahren ein Ermitteln (110) einer Ist-Form des Rotorblattes (51) umfasst,
wobei das Ermitteln (110) ein Annähern (111) der Ist-Form des Rotorblattes basierend auf mindestens einer Annäherungsfunktion umfasst,
wobei als Annäherungsfunktion die erste und/oder zweite und/oder dritte Eigenform des Rotorblattes (51) verwendet wird,
wobei das Verfahren (100) ein Festlegen (113) des mindestens einen zu beobachtenden Punktes (22) basierend auf der Ist-Form umfasst.

2. Verfahren (100) nach Anspruch 1,
**dadurch gekennzeichnet, dass**
das Verfahren (100) die vorherige Definition (101) mindestens eines Windturbinenzustands (25) umfasst,
wobei ein Windturbinenzustand (25) durch mindestens einen Umgebungszustand und mindestens einen Betriebszustand definiert wird.

3. Verfahren (100) nach Anspruch 2,
**dadurch gekennzeichnet, dass**
der Umgebungszustand einen Windzustand umfasst,
wobei der Windzustand eine Richtung und/oder eine Turbulenzintensität und/oder eine die Winddrehung über der Höhe und/oder eine mittlere Geschwindigkeit und/oder eine Scherung des Windes umfasst,
oder wobei der Umgebungszustand einen Wellengangzustand umfasst, wobei der Wellengangzustand eine dreidimensionale Ausbreitungsgeschwindigkeit und ein Höhenprofil der Ausbreitungsgeschwindigkeit des Wellengangs umfasst.

4. Verfahren (100) nach einem der Ansprüche 2 oder 3,
**dadurch gekennzeichnet, dass**
der Betriebszustand einen Pitchzustand des Rotorblattes (51) und/oder eine Rotordrehzahl der Windturbine (50) und/oder eine Leistung der Windturbine (50) umfasst.

5. Verfahren (100) nach Anspruch 1,
**dadurch gekennzeichnet, dass**
das Verfahren (100) eine Segmentierung (112) der Lidardaten (17) des mindestens einen ersten Lidarsensors (11a) für das mindestens eine Rotorblatt (51) umfasst,
bevor eine Ist-Form (20) aus den Lidardaten (17) ermittelt wird.

6. Verfahren (100) nach einem der Ansprüche 1 oder 5,
**dadurch gekennzeichnet, dass**
der Ist-Strukturzustand des zu beobachtenden Punktes mit den Lidardaten (17) verglichen wird (114).

7. Verfahren (100) nach einem der vorherigen Ansprüche,
**dadurch gekennzeichnet, dass**
der Ist-Strukturzustand zeitlich getrackt wird (116),
sodass eine Trajektorie (23a) des Ist-Strukturzustandes erstellt wird.

8. Verfahren (100) nach einem der Ansprüche 6 oder 7,
**dadurch gekennzeichnet, dass** das Verfahren
ein Herleiten (130) mindestens einer Einflussgröße zur Steuerung der Windturbine (50) umfasst.

9. Verfahren (100) nach einem der vorherigen Ansprüche,
**dadurch gekennzeichnet, dass**
das Verfahren (100) mehrere Messungen mittels mindestens eines zweiten Lidarsensors (11b) zur Ermittlung von Lidardaten (17) umfasst,
wobei es sich bei dem mindestens einen zweiten Lidarsensor (11b) um einen Solid-State-Lidarsensor handelt,
wobei der mindestens eine zweite Lidarsensor (11b) außen an der Windturbine (50) derart angeordnet ist, dass der zweite Lidarsensor (11b) nicht mit den Rotorblättern (51) der Windturbine (50) mitrotiert,
wobei auf Basis der Lidardaten (17) eine Ist-Form des Turmes (52) ermittelt wird,
wobei das Verfahren ein Beobachten eines Ist-Strukturzustandes mindestens eines Punktes des Turms der Windturbine umfasst,
wobei eine Einflussgröße zur Steuerung der Windturbine (50) ein Ist-Turmfreigang der Windturbine (50) ist,
wobei ein Ist-Strukturzustand jeweils mindestens eines Punktes sämtlicher Rotorblätter beobachtet wird,
wobei auf der Ist-Form des Turmes der Ist-Zustand eines Punktes beobachtet wird, der sich am nächsten zu der Ist-Form der Rotorblätter befindet,
wobei auf der Ist-Form der Rotorblätter der Ist-Zustand eines Punktes beobachtet wird, der sich am nächsten zu der Ist-Form des Turmes befindet, wobei aus dem Abstand der beiden Punkte der Ist-Turmfreigang bestimmt wird.

10. Vorrichtung (10) zum Betreiben einer Windturbine (50) umfassend mehrere Rotorblätter (51),
wobei
die Vorrichtung (10) mindestens einen ersten Lidarsensor (11a) zur Durchführung mehrerer Messungen und Ermittlung von Lidardaten (17) umfasst,
wobei die Vorrichtung (10) ferner eine Auswerteeinheit (13) zur Beobachtung des Ist-Strukturzustands mindestens eines Punktes eines Rotorblattes (51) der Windturbine (50) umfasst,
wobei der mindestens eine erste Lidarsensor (11a) außen an der Windturbine (50) derart angeordnet ist, dass der erste Lidarsensor (11a) mit den Rotorblättern (51) der Windturbine (50) mitrotiert,
wobei ein Punkt, dessen Ist-Strukturzustand beobachtet wird, als zu beobachtender Punkt (22) bezeichnet wird,
wobei der Ist-Strukturzustand des zu beobachtenden Punktes (22) eine Auslenkung des Punktes gegenüber einer Normalposition und/oder eine Geschwindigkeit des Punktes und/oder eine Beschleunigung des Punktes umfasst, wobei die Vorrichtung (10) zum Durchführung eines Verfahrens (100) nach einem der Ansprüche 1 bis 9 ausgebildet ist.

11. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 9 im Zusammenspiel mit einer Vorrichtung (10) gemäß Anspruch 10 durchzuführen.

## Claims

1. A method (100) for operating a wind turbine (50) comprising several rotor blades (51),
wherein the method (100) comprises several measurements (103) by means of at least one first lidar sensor (11a) for obtaining (105) lidar data (17),
wherein the at least one first lidar sensor (11a) is a solid-state lidar sensor,
the at least one first lidar sensor (11a) is arranged on the outside of the wind turbine (50) in such a way that the first lidar sensor (11a) rotates together with the rotor blades (51) of the wind turbine (50),
wherein an actual structural state of at least one point of a rotor blade (51) of the wind turbine (50) is observed on the basis of the lidar data (17),
wherein a point whose actual structural state is observed is designated as a point to be observed (22),
wherein the actual structural state of the point to be observed (22) comprises a deflection of the point with respect to a normal position and/or a velocity of the point and/or an acceleration of the point,
wherein the method comprises determining (110) an actual shape of the rotor blade (51),
wherein the determining (110) comprises an approximation (111) of the actual shape of the rotor blade based on at least one approximation function,
wherein the first and/or second and/or third eigenform of the rotor blade (51) is used as the approximation function,
wherein the method (100) comprises defining (113) the at least one point to be observed (22) based on the actual shape.

2. Method (100) according to claim 1,
**characterized in that**
the method (100) comprises a previous definition (101) of at least one wind turbine state (25),
wherein a wind turbine state (25) is defined by at least one ambient state and at least one operational state.

3. Method (100) according to claim 2,
**characterized in that**
the ambient state comprises a wind state,
wherein the wind state comprises a direction and/or a turbulence intensity and/or a the wind rotation over the height and/or a mean velocity and/or a shear of the wind,
or wherein the ambient state comprises a swell state,
wherein the swell state comprises a three-dimensional propagation velocity and a height profile of the propagation velocity of the swell.

4. Method (100) according to one of claims 2 or 3,
**characterized in that**
the operating state comprises a pitch state of the rotor blade (51) and/or a rotor speed of the wind turbine (50) and/or a power of the wind turbine (50).

5. Method (100) according to claim 1,
**characterized in that**
the method (100) comprises a segmentation (112) of the lidar data (17) of the at least one first lidar sensor (11a) for the at least one rotor blade (51),
before an actual shape (20) is determined from the lidar data (17).

6. Method (100) according to any one of claims 1 or 5,
**characterized in that**
the actual structural state of the point to be observed is compared (114) with the lidar data (17).

7. Method (100) according to one of the previous claims,
**characterized in that**
the actual structural state is tracked (116) in time,
so that a trajectory (23a) of the actual structural state is created.

8. Method (100) according to one of claims 6 or 7,
**characterized in that** the method comprises deriving (130) at least one influence quantity for controlling the wind turbine (50).

9. Method (100) according to one of the preceding claims,
**characterized in that**
the method (100) comprises several measurements by means of at least one second lidar sensor (11b) for determining lidar data (17),
wherein the at least one second lidar sensor (11b) is a solid-state lidar sensor, wherein the at least one second lidar sensor (11b) is arranged on the outside of the wind turbine (50) in such a way that the second lidar sensor (11b) does not rotate together with the rotor blades (51) of the wind turbine (50),
wherein an actual shape of the tower (52) is determined based on the lidar data (17),
wherein the method comprises observing an actual structural state of at least one point of the tower of the wind turbine,
wherein an influence quantity for controlling the wind turbine (50) is an actual tower clearance of the wind turbine (50),
wherein an actual structural state of at least one point of each of all rotor blades is observed,
wherein on the actual shape of the tower, the actual structural state of a point closest to the actual shape of the rotor blades is observed,
wherein on the actual shape of the rotor blades, the actual state of a point closest to the actual shape of the tower is observed,
wherein the actual tower clearance is determined from the distance between the two points.

10. Device (10) for operating a wind turbine (50) comprising several rotor blades (51),
wherein the device (10) comprises at least a first lidar sensor (11a) for performing several measurements and determining lidar data (17),
wherein the device (10) further comprises an evaluation unit (13) for observing the actual structural state of at least one point of a rotor blade (51) of the wind turbine (50),
wherein the at least one first lidar sensor (11a) is arranged on the outside of the wind turbine (50) in such a way that the first lidar sensor (11a) rotates together with the rotor blades (51) of the wind turbine (50),
wherein a point whose actual structural state is observed is referred to as a point to be observed (22),
wherein the actual structural state of the point to be observed (22) comprises a deflection of the point with respect to a normal position and/or a velocity of the point and/or an acceleration of the point,
wherein the device (10) is configured to perform a method (100) according to one of claims 1 to 9.

11. Computer program product comprising a computer-readable storage medium having stored thereon a program which, after having been loaded into the memory of the computer, enables a computer to perform a method (100) according to one of claims 1 to 9 in cooperation with a device (10) according to claim 10.

## Revendications

1. Procédé (100) de fonctionnement d'une éolienne (50) comprenant plusieurs pales de rotor (51), dans lequel le procédé (100) comprend une pluralité de mesures (103) au moyen d'au moins un premier capteur lidar (11a) pour déterminer (105) des données lidar (17), dans lequel le au moins un premier capteur lidar (11a) consiste en un capteur lidar à semi-conducteurs, le au moins un premier capteur lidar (11a) est disposé à l'extérieur de l'éolienne (50) de telle sorte que le premier capteur lidar (11a) tourne avec les pales du rotor (51) de l'éolienne (50), dans lequel sur la base des données lidar (17), un état structurel réel d'au moins un point d'une pale de rotor (51) de l'éolienne (50) est observé, dans lequel un point dont l'état structurel réel est observé est désigné comme le point à observer (22), dans lequel l'état structurel réel du point (22) à observer comprend une déviation du point par rapport à une position normale et/ou une vitesse du point et/ou une accélération du point, dans lequel le procédé comprend la détermination (110) d'une forme réelle de la pale de rotor (51), dans lequel la détermination (110) comprend une approximation (111) de la forme réelle de la pale de rotor sur la base d'au moins une fonction d'approximation, dans lequel la première et/ou la deuxième et/ou la troisième forme naturelle de la pale de rotor (51) est utilisée comme fonction d'approximation, dans lequel le procédé (100) comprend une détermination (113) de l'au moins un point (22) à observer sur la base de la forme réelle.

2. Procédé (100) selon la revendication 1, **caractérisé en ce que** le procédé (100) comprend la définition précédente (101) d'au moins un état d'éolienne (25), dans lequel un état d'éolienne (25) est défini par au moins un état environnemental et au moins un état de fonctionnement.

3. Procédé (100) selon la revendication 2, **caractérisé en ce que** l'état environnemental comprend une condition de vent, dans lequel l'état de vent est une direction et/ou une intensité de turbulence et/ou une dérive du vent par rapport à l'altitude et/ou une vitesse moyenne et/ou un cisaillement du vent, ou dans lequel l'état environnemental comprend une condition de houle, dans lequel l'état de houle comprend une vitesse de propagation tridimensionnelle et un profil de hauteur de la vitesse de propagation de houle.

4. Procédé (100) selon la revendication 2 ou 3, **caractérisé en ce que** l'état de fonctionnement comprend un état de pas de la pale de rotor (51) et/ou une vitesse de rotor de l'éolienne (50) et/ou une puissance de l'éolienne (50).

5. Procédé (100) selon la revendication 1, **caractérisé en ce que** le procédé (100) comprend une segmentation (112) des données lidar (17) du au moins un premier capteur lidar (11a) pour l'au moins une pale de rotor (51) avant qu'une forme réelle (20) soit déterminée à partir des données lidar (17).

6. Procédé (100) selon une des revendications 1 ou 5, **caractérisé en ce que** l'état structurel réel du point à observer est comparé (114) aux données lidar (17).

7. Procédé (100) selon une quelconque des revendications précédentes, **caractérisé en ce que** l'état structurel réel est suivi dans le temps (116), de sorte qu'une trajectoire (23a) de l'état structurel réel soit créée.

8. Procédé (100) selon une des revendications 6 ou 7,
**caractérisé en ce que** le procédé comprend la dérivation (130) d'au moins une grandeur d'influence pour commander l'éolienne (50).

9. Procédé (100) selon une quelconque des revendications précédentes, **caractérisé en ce que** le procédé (100) comprend une pluralité de mesures utilisant au moins un deuxième capteur lidar (11b) pour déterminer des données lidar (17),
dans lequel l'au moins un deuxième capteur lidar (11b) consiste en un capteur lidar à semi-conducteurs,
dans lequel l'au moins un deuxième capteur lidar (11b) est agencé à l'extérieur de l'éolienne (50) de telle sorte que le deuxième capteur lidar (11b) ne tourne pas avec les pales de rotor (51) de l'éolienne (50),
dans lequel une forme réelle de la tour (52) est déterminée sur la base des données lidar (17),
dans lequel le procédé comprend l'observation d'un état structurel réel d'au moins un point de la tour de l'éolienne,
dans lequel une grandeur d'influence pour commander l'éolienne (50) est un jeu de tour réel de l'éolienne (50),
dans lequel un état structurel réel d'au moins un point respectivement de toutes les pales du rotor est observé,
dans lequel l'état réel d'un point observé sur la forme réelle de la tour est observé, qui est le plus proche de la forme réelle des pales du rotor,
dans lequel l'état réel d'un point est observé sur la forme réelle des pales du rotor, qui est située au plus près de la forme réelle de la tour,
dans lequel le jeu réel de la tour est déterminé à partir de la distance entre les deux points.

10. Dispositif (10) de fonctionnement d'une éolienne (50) comprenant plusieurs pales de rotor (51), dans lequel le dispositif (10) comprend au moins un premier capteur lidar (11a) pour effectuer une pluralité de mesures et déterminer des données lidar (17),
dans lequel le dispositif (10) comprend en outre une unité d'évaluation (13) pour observer l'état structurel réel d'au moins un point d'une pale de rotor (51) de l'éolienne (50),
dans lequel l'au moins un premier capteur lidar (11a) est situé à l'extérieur de l'éolienne (50) de manière à ce que le premier capteur lidar (11a) tourne avec les pales de rotor (51) de l'éolienne (50),
dans lequel un point, dont l'état structurel réel est observé, est désigné comme le point à observer (22),
dans lequel l'état structurel réel du point (22) à observer comprend une déviation du point par rapport à une position normale et/ou une vitesse du point et /ou une accélération du point,
dans lequel le dispositif (10) est adapté pour mettre en oeuvre un procédé (100) selon une des revendications 1 à 9.

11. Produit de programme informatique, qui comprend un support de mémorisation lisible par ordinateur sur lequel est mémorisé un programme qui, après avoir été chargé dans la mémoire de l'ordinateur, permet à un ordinateur de mettre en oeuvre un procédé (100) selon une quelconque des revendications 1 à 9 en relation avec un dispositif (10) selon la revendication 10.
